(19) Europäisches Patentamt
European Patent Office
Office européen des brevets

(11) **EP 4 303 280 A1**

(12) **EUROPEAN PATENT APPLICATION**
published in accordance with Art. 153(4) EPC

(43) Date of publication:
**10.01.2024 Bulletin 2024/02**

(21) Application number: **22780503.3**

(22) Date of filing: **24.03.2022**

(51) International Patent Classification (IPC):
*C09D 175/04* (2006.01)    *C09D 175/08* (2006.01)
*C08G 18/40* (2006.01)    *C09D 7/65* (2018.01)

(52) Cooperative Patent Classification (CPC):
**C08G 18/40; C09D 7/65; C09D 175/04;
C09D 175/08**

(86) International application number:
**PCT/JP2022/014101**

(87) International publication number:
**WO 2022/210289 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021054733**

(71) Applicant: **Tosoh Corporation
Yamaguchi 746-8501 (JP)**

(72) Inventors:
• **NOGUCHI, Shuto
Yokkaichi-shi, Mie 510-8540 (JP)**
• **HORIGUCHI, Kenji
Yokkaichi-shi, Mie 510-8540 (JP)**

(74) Representative: **TBK
Bavariaring 4-6
80336 München (DE)**

(54) **COATING MATERIAL COMPOSITION, KIT, COATING FILM, AND COATING FILM FORMING METHOD**

(57) A coating material composition includes an organic polyisocyanate (A) and an acrylic polyol (B), wherein the organic polyisocyanate (A) contains a modified polyisocyanate (a), the modified polyisocyanate (a) is a reaction product of a polyisocyanate component (a1) and a polyol component (a2) or its modified product, the polyisocyanate component (a1) contains an organic diisocyanate or its modified product, the polyol component (a2) contains at least one selected from the group consisting of polytetramethylene glycol and polycarbonate polyols which have a number average molecular weight of 200 to 750, and the acrylic polyol (B) contains an acrylic polyol (b) having a glass transition temperature of 5 to 30°C and a hydroxyl value of more than 100 mg KOH/g and 150 mg KOH/g or less.

EP 4 303 280 A1

## Description

**Technical Field**

The present disclosure relates to a coating material composition, a kit, a coating film and a method of forming a coating film.

**Background Art**

A hard coat treatment in which a coating film having excellent scratch resistance, contamination resistance and the like is formed on the surface of a plastic molded article is known. The hard coat treatment is a method of forming a coating film having a high crosslinking density and surface hardness. However, if the coating film formed by the hard coat treatment is scratched once, cracks occur from that site. In addition, when a hard-coated plastic molded article is used in an exterior part of a vehicle, sand, pebbles and the like collide with the molded article when the vehicle is running, and scratches called fine dents (cratering, etc.) occur on the surface (the surface of the coating film). In the case of the hard coat treatment, the problem of scratches occurring on the surface of the coating film can be avoided by thickening the coating film, but thickening the coating film causes deterioration in design properties and an increase in the weight of exterior parts.

Therefore, in place of the hard coat treatment, a soft coat treatment in which a coating film is formed from a coating material composition having a function of absorbing an external force and restoring scratches (hereinafter referred to as "self-healing properties") is becoming popular. As a coating material composition for a soft coat treatment, for example, Patent Literature 1 discloses a coating material composition containing a polycarbonate diol having a specific repeating unit and a terminal hydroxyl group, wherein the specific repeating unit has an average number of carbon atoms of 3.0 to 4.0, a polyol other than the polycarbonate diol, and an organic polyisocyanate. Patent Literature 1 describes that a coating film having both high scratch recovery and contamination resistance is obtained from this coating material composition.

**Citation List**

**Patent Literature**

[Patent Literature 1] Japanese Unexamined Patent Publication No. 2019-137840

**Summary of Invention**

**Technical Problem**

However, the coating film obtained from the coating material composition of Patent Literature 1 has a long scratch recovery time and insufficient contamination resistance.

One aspect of the present disclosure is directed to providing a coating film having favorable contamination resistance and excellent self-healing properties against scratches. In addition, another aspect of the present disclosure is directed to providing a coating film having favorable smoothness, contamination resistance, and adhesion and excellent self-healing properties against scratches. In addition, still another aspect of the present disclosure is directed to providing a coating material composition that contributes to production of the coating film, a kit for preparing the coating material composition and a method of forming the coating film.

**Solution to Problem**

Respective aspects of the present disclosure include embodiments shown in the following [1] to [11].

[1] A coating material composition containing an organic polyisocyanate (A) and an acrylic polyol (B),

wherein the organic polyisocyanate (A) contains a modified polyisocyanate (a),
wherein the modified polyisocyanate (a) is a reaction product of a polyisocyanate component (a1) and a polyol component (a2) or its modified product,
wherein the polyisocyanate component (a1) contains an organic diisocyanate or its modified product,
wherein the polyol component (a2) contains at least one selected from the group consisting of polytetramethylene glycol and polycarbonate polyols which have a number average molecular weight of 200 to 750, and

wherein the acrylic polyol (B) contains an acrylic polyol (b) having a glass transition temperature of 5 to 30°C and a hydroxyl value of more than 100 mg KOH/g and 150 mg KOH/g or less.

[2] The coating material composition according to [1],
wherein the average number of functional groups of the modified polyisocyanate (a) is 4.0 to 6.0.
[3] The coating material composition according to [1] or [2],
wherein the polyisocyanate component (a1) contains at least one selected from the group consisting of aliphatic diisocyanates and alicyclic diisocyanates.
[4] The coating material composition according to any one of [1] to [3],
wherein the modified polyisocyanate (a) contains an allophanate-modified polyisocyanate.
[5] The coating material composition according to [4],
wherein the modified polyisocyanate (a) further contains an isocyanurate-modified polyisocyanate.
[6] The coating material composition according to any one of [1] to [5], further containing a polydimethylsiloxane compound.
[7] The coating material composition according to [6],
wherein the silicon content in terms of $SiO_2$ based on a total amount of the organic polyisocyanate (A), the acrylic polyol (B) and the polydimethylsiloxane compound is 0.001 to 0.1 mass%.
[8] The coating material composition according to any one of [1] to [7],
wherein the ratio of the number of moles of isocyanate groups in an isocyanate group-containing compound contained in the coating material composition to the number of moles of hydroxyl groups in a hydroxyl group-containing compound contained in the coating material composition is 0.8 to 1.3.
[9] A kit for preparing the coating material composition according to any one of [1] to [8], including
a first agent containing the organic polyisocyanate (A) and a second agent containing the acrylic polyol (B).
[10] A coating film including a cured product of the coating material composition according to any one of [1] to [8].
[11] A method of forming a coating film, including:
applying the coating material composition according to any one of [1] to [8] onto an adherend and performing curing.

**Advantageous Effects of Invention**

According to one aspect of the present disclosure, it is possible to provide a coating film having favorable contamination resistance and excellent self-healing properties against scratches. In addition, according to another aspect of the present disclosure, it is possible to provide a coating film having favorable smoothness, contamination resistance, and adhesion and excellent self-healing properties against scratches. In addition, according to still another aspect of the present disclosure, it is possible to provide a coating material composition that contributes to production of the coating film, a kit for preparing the coating material composition and a method of forming the coating film.

**Description of Embodiments**

Exemplary embodiments for implementing respective aspects of the present disclosure will be described in more detail. However, the present disclosure is not limited to the following embodiments.
Here, in this specification, when a numerical range is indicated using "to," it means a range including numerical values stated before and after "to" as a minimum value and a maximum value. In addition, unless otherwise specified, units of numerical values stated before and after "to" are the same. In addition, in the numerical ranges described in this specification, an upper limit value or a lower limit value in the numerical range may be replaced with values shown in examples. In addition, the upper limit value and the lower limit value described individually can be arbitrarily combined. In addition, in this specification, "(meth)acryl" means at least one of acryl and its corresponding methacryl.

<Coating material composition>

A coating material composition according to one aspect of the present disclosure contains an organic polyisocyanate (A) and an acrylic polyol (B), the organic polyisocyanate (A) contains a modified polyisocyanate (a), the modified polyisocyanate (a) is a reaction product of a polyisocyanate component (a1) and a polyol component (a2) or its modified product, the polyisocyanate component (a1) contains an organic diisocyanate or its modified product, the polyol component (a2) contains at least one selected from the group consisting of polytetramethylene glycol and polycarbonate polyols which have a number average molecular weight of 200 to 750, and the acrylic polyol (B) contains an acrylic polyol (b) having a glass transition temperature of 5 to 30°C and a hydroxyl value of more than 100 mg KOH/g and 150 mg KOH/g or less.
A coating film having favorable contamination resistance and excellent self-healing properties against scratches can be obtained from the coating material composition according to one aspect of the present disclosure. In addition, a coating film having favorable smoothness and adhesion can also be obtained from the coating material composition according to one aspect of the present disclosure. Hereinafter, the coating material composition according to one aspect of the present disclosure and respective components that can be contained in the coating material composition will be described in detail.

(Organic polyisocyanate (A))

The organic polyisocyanate (A) contains a modified polyisocyanate (a). The modified polyisocyanate (a) is a reaction product of a polyisocyanate component (a1) and a polyol component (a2) or its modified product.

The reaction product may be a urethane-modified polyisocyanate obtained by the reaction between the polyisocyanate component (a1) and the polyol component (a2), and may be an allophanate-modified polyisocyanate obtained by allophanating the urethane-modified polyisocyanate or an isocyanurate-modified polyisocyanate obtained by isocyanurating the urethane-modified polyisocyanate.

The modified product includes, for example, a block-modified product of the reaction product. The block-modified product has a structure in which some isocyanate groups are modified with a blocking agent. When the blocking agent blocks isocyanate groups, it prevents the reaction between isocyanate groups and water and active hydrogen groups such as hydroxyl groups, and inhibits the progress of the reaction in the coating material composition. Therefore, according to the block-modified product, it is possible to easily make it into one liquid. The modified polyisocyanate (a), which is a block-modified product, is a latent curing agent that reacts with active hydrogen groups when the blocking agent is dissociated by heating and isocyanate groups are activated again. Details of the blocking agent will be described below. Here, in the following description, allophanate-modified polyisocyanates and isocyanurate-modified polyisocyanates include a allophanate-modified polyisocyanate and isocyanurate-modified polyisocyanate which are block-modified.

The modified polyisocyanate (a) preferably contains an allophanate-modified polyisocyanate. When the modified polyisocyanate (a) contains an allophanate-modified polyisocyanate, it is possible to obtain a flexible and tough coating film, it is possible to make it into a liquid with a lower viscosity, an effect of improving handling properties in the coating is exhibited, and self-healing properties of the coating film are further improved.

The modified polyisocyanate (a) may contain the allophanate-modified polyisocyanate and the isocyanurate-modified polyisocyanate in order to obtain a more flexible and tough coating film. When the modified polyisocyanate (a) contains an isocyanurate-modified polyisocyanate, the glass transition temperature of the obtained coating film (polyurethane resin in the coating film) increases, but in order to lower the glass transition temperature, for example, by increasing the content of the structure derived from a polycarbonate polyol, it is possible to prevent self-healing properties from deteriorating.

When the modified polyisocyanate (a) contains an allophanate-modified polyisocyanate or an isocyanurate-modified polyisocyanate, if the number of urethane groups in the modified polyisocyanate (a) is smaller, it is possible to improve self-healing properties of the coating film. In view of this regard, the modified polyisocyanate (a) may be substantially free of urethane groups. When it is described that the modified polyisocyanate (a) is substantially free of urethane groups, it means that the content of the urethane-modified polyisocyanate confirmed through proton nuclear magnetic resonance ($^{1}$H-NMR) spectrums based on a total amount of allophanate-modified polyisocyanates, isocyanurate-modified polyisocyanates and urethane-modified polyisocyanates is 0.5 mol% or less.

The content (total amount) of the allophanate-modified polyisocyanate and the isocyanurate-modified polyisocyanate in the modified polyisocyanate (a) based on a total mass of the modified polyisocyanate (a) may be 80 mass% or more or 90 mass% or more and may be 100 mass% in order to further improve self-healing properties of the coating film.

When the modified polyisocyanate (a) contains an allophanate-modified polyisocyanate and an isocyanurate-modified polyisocyanate, the content of the isocyanurate-modified polyisocyanate based on a total amount of the allophanate-modified polyisocyanate and the isocyanurate-modified polyisocyanate may be 30 mol% or less and may be 20 mol% or less or 10 mol% or less in order to further improve self-healing properties of the coating film. The content of the isocyanurate-modified polyisocyanate based on a total amount of the allophanate-modified polyisocyanate and the isocyanurate-modified polyisocyanate may be 1 mol% or more and may be 2 mol% or more or 3 mol% or more in order to further improve the contamination resistance of the coating film. In view of this, the content of the isocyanurate-modified polyisocyanate may be 1 to 30 mol%, 2 to 20 mol% or 3 to 10 mol%. The content can be confirmed through proton nuclear magnetic resonance ($^{1}$H-NMR) spectrums.

The average number of functional groups of the modified polyisocyanate (a) may be 4.0 or more or 4.5 or more in order to obtain a coating film having better self-healing properties. In consideration of the viscosity, the average number of functional groups of the modified polyisocyanate (a) may be 6.0 or less and may be 5.5 or less. In view of this, the average number of functional groups of the modified polyisocyanate (a) may be 4.0 to 6.0 or 4.5 to 5.5.

In this specification, the average number of functional groups of the modified polyisocyanate (a) is an average number of isocyanate groups (-NCO) contained in one molecule of the modified polyisocyanate (a). The average number of functional groups of the modified polyisocyanate (a) can be calculated from the isocyanate group content (NCO content) of the modified polyisocyanate (a) and the number average molecular weight. When the modified polyisocyanate (a) is a block-modified product, the average number of functional groups includes the number of blocked isocyanate groups.

The NCO content of the modified polyisocyanate (a) may be 13.0 to 23.0 mass%, 14.0% to 22.0 mass% or 15.0 to 21.0 mass%. When the NCO content of the modified polyisocyanate (a) is 23.0 mass% or less, the self-healing properties of the coating film are further improved. When the NCO content of the modified polyisocyanate (a) is 13.0 mass% or more, the coating film has favorable contamination resistance.

In this specification, the NCO content is a value measured by the method described in JIS K 1603-1 (polyurethane raw material aromatic isocyanate test method). However, when the modified polyisocyanate (a) is a block-modified product, the NCO content of the modified polyisocyanate (a) in an unblocked state (when the blocking agent is dissociated) is measured.

The number average molecular weight of the modified polyisocyanate (a) may be 500 to 8,000, 600 to 7,500 or 700 to 7,000. When the number average molecular weight of the modified polyisocyanate (a) is 500 or more, self-healing properties of the coating film are further improved. When the number average molecular weight of the modified polyisocyanate (a) is 8,000 or less, the smoothness of the coating film is further improved, and the appearance of the coating film is further improved.

In this specification, the number average molecular weight is a value measured using gel permeation chromatography (GPC) under the following conditions. However, when the modified polyisocyanate (a) is a block-modified product, the number average molecular weight of the modified polyisocyanate (a) in an unblocked state (when the blocking agent is dissociated) is measured.

[Conditions]

- Measurement instrument: "HLC-8120" (commercially available from Tosoh Corporation)
- Column: "TSK guard column HXL-L" (commercially available from Tosoh Corporation)
  Particle size=6 $\mu$m, size=6 mm ID$\times$30 cm$\times$4 columns
- Carrier: tetrahydrofuran (THF)
- Detector: parallax refraction
- Sample: 0.1% THF solution
- Calibration curve: polystyrene

The viscosity of the modified polyisocyanate (a) at 25°C may be 500 to 10,000 mPa·s, 800 to 6,000 mPa·s or 1,000 to 3,000 mPa·s. If the viscosity of the modified polyisocyanate (a) at 25°C is within the above range, coating film forming properties are improved, the smoothness of the coating film is further improved, and the appearance of the coating film is further improved. The viscosity of the modified polyisocyanate (a) at 25°C is a value measured using a B-type viscometer.

The organic polyisocyanate (A) may contain one modified polyisocyanate (a) alone or two or more thereof in combination. In addition, the organic polyisocyanate (A) may contain an organic polyisocyanate (for example, a polyisocyanate component (a1) which is a reaction raw material) other than the modified polyisocyanate (a) as long as self-healing properties are not impaired. However, the content of the modified polyisocyanate (a) in the organic polyisocyanate (A) based on a total mass of the organic polyisocyanate (A) is preferably 80 mass% or more, more preferably 90 mass%, and still more preferably 100 mass%. The content of the free polyisocyanate component (a1) based on a total mass of the organic polyisocyanate (A) may be 1.0 mass% or less.

Next, the polyisocyanate component (a1) and the polyol component (a2), which are reaction raw materials for the modified polyisocyanate (a), and a method of producing the modified polyisocyanate (a) will be described.

[Polyisocyanate component (a1)]

The polyisocyanate component (a1) is a component composed of an organic compound having a plurality of isocyanate groups, and contains an organic diisocyanate or its modified product. The organic diisocyanate is an organic compound having two isocyanate groups. Examples of organic diisocyanates include aromatic diisocyanate, aromatic aliphatic diisocyanate, aliphatic diisocyanate and alicyclic diisocyanate. The modified product may be a modified product of these organic diisocyanates. Examples of modified products include allophanate-modified polyisocyanate, isocyanurate-modified polyisocyanate, uretdione-modified polyisocyanate, urethane-modified polyisocyanate, burette-modified polyisocyanate, uretonimine-modified polyisocyanate, and acylurea-modified polyisocyanate. The polyisocyanate component (a1) may be one selected from among the above organic diisocyanates and modified products or a mixture of two or more selected from among the above organic diisocyanates and modified products.

Examples of aromatic diisocyanates include 2,4-tolylene diisocyanate, 2,6-tolylene diisocyanate, 2,4-tolylene diisocyanate/2,6-tolylene diisocyanate mixture, m-xylylene diisocyanate, p-xylylene diisocyanate, 4,4'-diphenylmethane diisocyanate, 2,4'-diphenylmethane diisocyanate, 2,4'-diphenylmethane diisocyanate/4,4'-diphenylmethane diisocyanate mixture, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate.

Examples of aromatic aliphatic diisocyanates include 1,3- or 1,4-xylylene diisocyanate or its mixture, 1,3- or 1,4-bis(1-isocyanato-1-methylethyl)benzene or its mixture, and ω,ω'-diisocyanato-1,4-diethylbenzene.

Examples of aliphatic diisocyanates include hexamethylene diisocyanate, tetramethylene diisocyanate, 2-methyl-pentane-1,5-diisocyanate, 3-methyl-pentane-1,5-diisocyanate, lysine diisocyanate, and trioxyethylene diisocyanate.

Examples of alicyclic diisocyanates include isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate.

In consideration of weather resistance of the coating film, an organic diisocyanate is preferable, and it is more preferable to use at least one selected from the group consisting of aliphatic diisocyanates and alicyclic diisocyanates. In addition, in consideration of weather resistance of the coating film, a polyisocyanate having no unsaturated bond is preferable. That is, it is more preferable to use at least one selected from the group consisting of aliphatic diisocyanates and alicyclic diisocyanates which have no unsaturated bond. Among these, hexamethylene diisocyanate is particularly preferable because it is easy to obtain and synthesize and a coating film having better adhesion and self-healing properties is obtained.

The polyisocyanate component (a1) may contain a polyisocyanate other than the organic diisocyanate and its modified product. However, the content (total amount) of the organic diisocyanate and its modified product in the polyisocyanate component (a1) based on a total mass of the polyisocyanate component (a1) is preferably 80 mass% or more, more preferably 90 mass%, and still more preferably 100 mass%.

[Polyol component (a2)]

The polyol component (a2) is a component composed of an organic compound having a plurality of hydroxyl groups. The polyol component (a2) contains at least one selected from the group consisting of polytetramethylene glycol and polycarbonate polyols which have a number average molecular weight of 200 to 750.

Polytetramethylene glycol is a compound having an oxytetramethylene group in its molecular framework, and is mainly obtained by ring-opening polymerization of tetrahydrofuran. The number average molecular weight of polytetramethylene glycol is 200 to 750, and may be 220 or more or 250 or more, may be 600 or less or 500 or less, and may be 220 to 600 or 250 to 500. If the number average molecular weight of polytetramethylene glycol is larger, self-healing properties of the coating film are likely to be improved, and if the number average molecular weight of polytetramethylene glycol is smaller, the smoothness of the coating film is likely to be improved and a favorable coating film appearance is easily obtained.

The polycarbonate polyol is a compound having a plurality of carbonate groups and a plurality of hydroxyl groups, and is mainly obtained according to a dealcoholization reaction or dephenolation reaction between a low-molecular-weight polyol (for example, a polyol having a molecular weight of 500 or less) and a carbonate. Examples of polycarbonate polyols include a compound (reaction product) obtained according to a dealcoholization reaction or dephenolation reaction between at least one selected from the group of compounds shown in the following (α) and at least one selected from the group of compounds shown in the following (β).

(α): low-molecular-weight polyols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, diethylene glycol, dipropylene glycol, cyclohexane-1,4-diol, cyclohexane-1,4-dimethanol, dimerdiol, ethylene oxide adducts of bisphenol A, propylene oxide adducts of bisphenol A, bis(β-hydroxyethyl)benzene, xylylene glycol, glycerin, trimethylolpropane, and pentaerythritol

(β): carbonates, for example, dialkyl carbonates such as dimethyl carbonate, and diethyl carbonate; alkylene carbonates such as ethylene carbonate, and propylene carbonate; and diaryl carbonates such as diphenyl carbonate, dinaphthyl carbonate, dianthryl carbonate, diphenanthrylcarbonate, diindanyl carbonate, and tetrahydronaphthyl carbonate.

In order to further improve the contamination resistance of the coating film, the polycarbonate polyol is preferably one obtained by a dealcoholization reaction between 1,6-hexanediol and dialkyl carbonate (reaction product of 1,6-hexanediol and dialkyl carbonate).

The number average molecular weight of the polycarbonate polyol is 200 to 750, and may be 220 or more, 250 or more or 300 or more, may be 600 or less, 500 or less or 400 or less, and may be 220 to 600, 250 to 500, 300 to 750 or 200 to 400. If the number average molecular weight of the polycarbonate polyol is larger, self-healing properties of the coating film are likely to be improved, and if the number average molecular weight of the polycarbonate polyol is smaller, the smoothness of the coating film is likely to be improved and a favorable coating film appearance is easily obtained.

The polyol component (a2) may contain polyols (other polyols) other than polytetramethylene glycol and polycarbonate polyols. In other words, the modified polyisocyanate (a) may be a reaction product of a polyisocyanate component (a1) (for example, an organic diisocyanate or its modified product), at least one selected from the group consisting of polytetramethylene glycol and polycarbonate polyols which have a number average molecular weight of 200 to 750, and other polyols. However, the content (total amount) of polytetramethylene glycol and polycarbonate polyols in the polyol component (a2) based on a total mass of the polyol component (a2) is preferably 80 mass% or more, more preferably 90 mass%, and still more preferably 100 mass%.

Examples of other polyols include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 2-ethyl-1,3-hexanediol, 3,3-dimethylolheptane, diethylene glycol, dipropylene glycol, neopentyl glycol, cyclohexane-1,4-diol, cyclohexane-1,4-dimethanol, dimerdiol, ethylene oxide adducts of bisphenol A, propylene oxide adducts of bisphenol A, bis($\beta$-hydroxyethyl)benzene, xylylene glycol, glycerin, trimethylolpropane, and pentaerythritol. As other polyols, one compound may be used, or two or more compounds may be used in combination.

As other polyols, polyester polyols, polyether polyols, acrylic polyols, polyolefin polyols, fluorine-based polyols, animal and vegetable oil-based polyols and the like can be used.

[Method of producing modified polyisocyanate (a)]

The modified polyisocyanate (a) can be obtained, for example, through the following first process to fourth process.

-First process: a polyisocyanate component (a1) and a polyol component (a2) are prepared in an amount at which the number of isocyanate groups with respect to hydroxyl groups becomes excessive, and subjected to a urethanization reaction to obtain an isocyanate group-terminated prepolymer I.

- Second process: a catalyst is added to the isocyanate group-terminated prepolymer I and allophanatization proceeds at 70 to 150°C to produce an isocyanate group-terminated prepolymer II.
- Third process: a reaction terminator is added to the isocyanate group-terminated prepolymer II to terminate the reaction.
- Fourth process: a free polyisocyanate component (a1) is removed by performing thin film distillation or solvent extraction on the isocyanate group-terminated prepolymer II to obtain a modified polyisocyanate (a).

In the first process to third process, the reaction proceeds under nitrogen gas or dry air flow. The first process to third process may be performed in the presence of an organic solvent or may be performed in the absence of an organic solvent.

As the organic solvent, various organic solvents that do not affect the reaction can be used. Examples of organic solvents include aliphatic hydrocarbons such as octane; alicyclic hydrocarbons such as cyclohexane and methylcyclohexane; ketones such as methyl isobutyl ketone, and cyclohexanone; esters such as butyl acetate, and isobutyl acetate; glycol ether esters such as ethylene glycol ethyl ether acetate, propylene glycol monomethyl ether acetate, 3-methyl-3-methoxybutyl acetate, and ethyl-3-ethoxypropionate; ethers such as dioxane; halogenated hydrocarbons such as methylene iodide, and monochlorobenzene; and polar aprotic solvents such as N-methylpyrrolidone, dimethylformamide, dimethylacetamide, dimethylsulfoxide, and hexamethylphosphonylamide. These organic solvents may be used alone or two or more thereof may be used in combination.

Next, using a process of producing a modified polyisocyanate (a) in which allophanate modification mainly proceeds as an example, a method of producing a modified polyisocyanate (a) according to one embodiment will be described in more detail.

[First process: process of producing isocyanate group-terminated prepolymer I]

In the first process, a polyisocyanate component (a1) and a polyol component (a2) are reacted to produce an isocyanate group-terminated prepolymer I. The amount of the polyisocyanate component (a1) and the polyol component (a2) prepared is an amount at which the number of isocyanate groups with respect to hydroxyl groups becomes excessive.

The "amount at which the number of isocyanate groups with respect to hydroxyl groups becomes excessive" may be an amount at which the ratio R' (=$M'_{NCO}$/$M'_{OH}$) of the number of moles ($M'_{NCO}$) of isocyanate groups in the polyisocyanate component (a1) to the number of moles ($M'_{OH}$) of hydroxyl groups in the polyol component (a2) is 6 to 40, and may be an amount at which the ratio R' is 7 to 30. If the ratio R' is 6 or more, it is possible to further reduce excessive isocyanurate-modified polyisocyanates in the obtained modified polyisocyanate (a). If the ratio R' is 40 or less, an increase in the amount of a polyisocyanate containing urethane groups contained in the obtained modified polyisocyanate (a) is further reduced, a decrease in the number of functional groups is further reduced, and the productivity and yield are further improved.

The temperature at which the polyisocyanate component (a1) and the polyol component (a2) are reacted (urethanization reaction temperature) is, for example, 20 to 120°C, and may be 20 to 100°C or 50 to 100°C. The reaction time for the urethanization reaction varies depending on the presence of a catalyst, the type, and the temperature, and is generally within 10 hours and may be 1 to 5 hours.

A known urethanization catalyst can be used during the urethanization reaction. Examples of urethanization catalysts include organometallic compounds such as dibutyltin diacetate, dibutyltin dilaurate, and dioctyltin dilaurate; and organic amines such as triethylenediamine and trimethylamine and salts thereof. These catalysts may be used alone or two or more thereof may be used in combination.

[Second process: process of producing isocyanate group-terminated prepolymer II]

In the second process, after the urethanization reaction in the first process, an allophanatization reaction is additionally performed to produce an isocyanate group-terminated prepolymer II. In this case, the allophanatization reaction may be performed simultaneously (in parallel) with the urethanization reaction, or may be performed after the urethanization reaction is completed.

When the urethanization reaction and the allophanatization reaction are performed simultaneously (in parallel), the reaction may be performed in the presence of a urethanization catalyst and an allophanatization catalyst. On the other hand, when the allophanatization reaction is performed after the urethanization reaction is completed, in the presence of a urethanization catalyst and in the absence of an allophanatization catalyst, after the urethanization reaction is performed for a predetermined time, an allophanatization catalyst may be added to perform the allophanatization reaction.

As the allophanatization catalyst, one appropriately selected from among known catalysts can be used. For example, metal salts of carboxylic acid (metal salts of alkali metals such as lithium, sodium, and potassium; metal salts of alkaline earth metals such as magnesium, calcium, and barium; metal salts of other typical metals such as tin and lead; metal salts of transition metals of manganese, iron, cobalt, nickel, copper, zinc, and zirconium; etc.) can be used. Examples of carboxylic acids include monocarboxylic acids and polycarboxylic acids.

Specific examples of allophanatization catalysts include zirconium octylate. The allophanatization catalysts may be used alone or two or more thereof may be used in combination.

The amount of the allophanatization catalyst used based on a total mass of the polyisocyanate component (a1) and the polyol component (a2) may be 0.001 to 0.1 mass% or 0.005 to 0.03 mass%. If the amount of the allophanatization catalyst used is 0.001 mass% or more, the allophanatization reaction proceeds more easily, the amount of by-products of the urethane-modified polyisocyanate is reduced, and a decrease in the number of functional groups of the obtained polyisocyanate is further reduced. In addition, if the amount of the allophanatization catalyst used is 0.1 mass% or less, the storage stability is further improved.

The reaction temperature for the allophanatization reaction is preferably 70 to 150°C and more preferably 90 to 130°C. If the reaction temperature is 70°C or higher, the allophanate-modified polyisocyanate is more likely to be produced, and the amount of by-products of the urethane-modified polyisocyanate is further reduced, and thus a decrease in the number of functional groups of the obtained polyisocyanate is further reduced. In addition, if the reaction temperature is 150°C or lower, the amount of by-products of the isocyanurate-modified polyisocyanate is reduced, and self-healing properties are further improved.

The allophanatization reaction is preferably performed until the urethane groups are substantially absent. Here, "urethane groups are substantially absent" means that the content of the urethane-modified polyisocyanate confirmed through proton nuclear magnetic resonance ($^1$H-NMR) spectrums based on a total amount of allophanate-modified polyisocyanates, isocyanurate-modified polyisocyanates and urethane-modified polyisocyanates is 0.5 mol% or less.

In the second process, the allophanatization reaction mainly proceeds, but as described above, when the ratio R'(=$M'_{NCO}$/$M'_{OH}$) in the first process is adjusted, the isocyanuration reaction can partially proceed. For example, when the ratio R' is 10 or more, the content of the isocyanurate-modified polyisocyanate (based on a total amount of allophanate-modified polyisocyanate and isocyanurate-modified polyisocyanate) can be 30 mol% or less.

[Third process: reaction stop process]

In the third process, after the allophanatization reaction in the second process, the allophanatization reaction is terminated by adding a reaction terminator that deactivates the catalyst. The time at which the reaction terminator is added may be after the allophanatization reaction is completed (after urethane groups are substantially absent). However, in order to inhibit the progress of the side reaction, it is preferable to add the reaction terminator immediately after the allophanatization reaction is completed.

As the reaction terminator, known compounds, for example, inorganic acids such as phosphoric acid and hydrochloric acid, organic acids having a sulfonic acid group, a sulfamic acid group or the like, esters thereof, and acyl halides can be used. These may be used alone or two or more thereof may be used in combination.

The amount of the reaction terminator added varies depending on the type of the catalyst, but may be 0.5 to 10 equivalent or 0.8 to 5.0 equivalent with respect to the amount of the catalyst added. If the amount of the reaction terminator added is 0.5 equivalent or more, the storage stability of the obtained modified polyisocyanate is further improved. If the amount of the reaction terminator added is 10 equivalent or less, coloration can be further reduced. After the reaction is terminated, a purification process in which the free unreacted polyisocyanate component (a1) is removed can be performed.

[Fourth process: purification process]

In the fourth process, the free unreacted polyisocyanate component (a1) present in the reaction mixture is removed. In addition, when an organic solvent is used in the reaction process, it can be removed in the purification process.

The polyisocyanate component (a1) is preferably removed to a residual content of 1.0 mass% or less, and more preferably removed to a residual content of less than 1.0 mass%. If the residual content is 1.0 mass% or less, the odor is further reduced, and the storage stability is further improved.

Removal of the polyisocyanate component (a1) is preferably performed by thin film distillation. For thin film distillation, for example, thin film distillation can be performed under a high vacuum of 10 to 100 Pa at 120 to 140°C.

The method of producing a modified polyisocyanate (a) according to one embodiment has been described above, but the method of producing a modified polyisocyanate (a) is not limited to the above embodiment.

For example, in another embodiment, without performing the second process to fourth process, the isocyanate group-terminated prepolymer I obtained in the first process may be used as a modified polyisocyanate (a).

In addition, for example, in another embodiment, after the fourth process, a process of modifying (blocking) some isocyanate groups with a blocking agent may be performed. Examples of blocking agents include phenol-based blocking agents such as phenol, cresol, xylenol, nitrophenol, chlorophenol, ethylphenol, p-hydroxydiphenyl, t-butylphenol, o-isopropylphenol, o-sec-butylphenol, p-nonylphenol, p-t-octylphenol, hydroxybenzoic acid, and hydroxybenzoic acid ester; lactam-based blocking agents such as $\varepsilon$-caprolactam, $\delta$-valerolactam, $\gamma$-butyrolactam, and $\beta$-propiolactam; active methylene-based blocking agents such as diethyl malonate, dimethyl malonate, ethyl acetoacetate, methyl acetoacetate, and acetylacetone; methanol, ethanol, n-propyl alcohol, isopropyl alcohol, n-butyl alcohol, isobutyl alcohol, t-butyl alcohol, n-amyl alcohol, t-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, benzyl alcohol, methoxymethanol, and glycolic acid esters such as glycolic acid, methyl glycolate, ethyl glycolate, and butyl glycolate, lactate esters such as lactic acid, methyl lactate, ethyl lactate, and butyl lactate, and alcohol-based blocking agents such as methylol urea, methylol melamine, diacetone alcohol, ethylene chlorohydrin, ethylene bromhydrin, 1,3-dichloro-2-propanol, $\omega$-hydroperfluoroalcohol, and acetocyanohydrin; mercaptan-based blocking agents such as butyl mercaptan, hexyl mercaptan, t-butyl mercaptan, t-dodecyl mercaptan, 2-mercaptobenzothiazole, thiophenol, methylthiophenol, and ethylthiophenol; acid amide-based blocking agents such as acetanilide, acetanisidide, acetamide, acrylamide, methacrylamide, acetic acid amide, stearic acid amide, and benzamide; imide-based blocking agents such as succinimide, phthalimide, and maleimide; amine-based blocking agents such as diphenylamine, phenylnaphthylamine, xylidine, N-phenylxylidine, carbazole, aniline, naphthylamine, butylamine, dibutylamine, and butylphenylamine; imidazole-based blocking agents such as imidazole and 2-ethylimidazole; urea-based blocking agents such as urea, thiourea, ethyleneurea, ethylenethiourea, and 1,3-diphenylurea; carbamate-based blocking agents such as phenyl N-phenylcarbamate and 2-oxazolidone; imine-based blocking agents such as ethylene imine, and propylene imine; oxime-based blocking agents such as formamidoxime, acetaldoxime, acetoxime, methyl ethyl ketoxime, diacetyl monoxime, benzophenone oxime, and cyclohexanone oxime; and sulfite-based blocking agents such as sodium bisulfite, and potassium bisulfite. These blocking agents may be used alone or two or more thereof may be used in combination.

In addition, for example, when an isocyanuration catalyst is used in place of an allophanatization catalyst, isocyanurate modification may mainly proceed. The degree of progress of allophanate modification or isocyanurate modification can be adjusted by selecting various catalysts and according to the ratio $R'(=M'_{NCO}/M'_{OH})$.

(Acrylic polyol (B))

The acrylic polyol (B) includes an acrylic polyol (b). Here, the "acrylic polyol" is a polymer containing a (meth)acrylic monomer as a monomer unit and having a plurality of hydroxyl groups.

The acrylic polyol (b) may be a homopolymer obtained by polymerizing one (meth)acrylic monomer or may be a copolymer obtained by copolymerizing two or more (meth)acrylic monomers. The acrylic polyol (b) may contain monomers other than (meth)acrylic acrylic monomers as monomer units, and preferably contains only (meth)acrylic acrylic monomers as monomer units in order to achieve both a predetermined glass transition temperature and hydroxyl value.

Examples of homopolymers obtained by polymerizing one (meth)acrylic monomer include a homopolymer of a (meth)acrylic acid hydroxy compound. Examples of copolymers obtained by copolymerizing two or more (meth)acrylic monomers include copolymers obtained by copolymerizing a (meth)acrylic acid ester and a (meth)acrylic acid hydroxy compound.

Here, the (meth)acrylic acid ester is at least one selected from the group consisting of acrylic acid esters and methacrylic acid esters. The (meth)acrylic acid hydroxy compound is at least one selected from the group consisting of acrylic acid hydroxy compounds and methacrylic acid hydroxy compounds, which has one or more hydroxyl groups in its molecule that can serve as reaction sites.

The glass transition temperature (glass transition point, Tg) of the acrylic polyol (b) is 5 to 30°C. If the glass transition temperature of the acrylic polyol (b) is lower than 5°C, self-healing properties against repeated scratches and contamination resistance during use outdoors may deteriorate. In addition, if the glass transition temperature of the acrylic polyol (b) is higher than 30°C, self-healing properties at room temperature (for example, 5 to 35°C) and a low temperature (for example, lower than 5°C) may deteriorate. The glass transition temperature of the acrylic polyol (b) may be 10°C or higher or 15°C or higher in order to further improve self-healing properties against repeated scratches and contamination resistance during use outdoors. The glass transition temperature of the acrylic polyol (b) may be 25°C or lower or 20°C or lower in order to further improve self-healing properties at room temperature and a low temperature. In view of this, the glass transition temperature of the acrylic polyol (b) may be 10 to 25°C or 15 to 20°C. The polyol (b) having a glass transition temperature within the above range can be synthesized by adjusting the type and mixing ratio of monomer components, and for example, when the acrylic polyol (b) is a copolymer, the glass transition temperature is estimated by the Fox method, and when the mixing ratio of monomer components is set, it is possible to obtain the acrylic polyol (b) having a glass transition temperature within the above range.

The glass transition temperature of the acrylic polyol (b) is determined by measuring the inflection point of DSC according to JIS K 7121.

The hydroxyl value of the acrylic polyol (b) is more than 100 mg KOH/g and 150 mg KOH/g or less. If the hydroxyl value of the acrylic polyol (b) is outside of such a range, the self-healing properties, contamination resistance and smoothness may deteriorate. The hydroxyl value of the acrylic polyol (b) may be 120 mg KOH/g or more or 140 mg KOH/g or more in order to further improve contamination resistance and smoothness. The hydroxyl value of the acrylic polyol (b) may be 130 mg KOH/g or less or 110 mg KOH/g or less in order to further improve self-healing properties. In view of this, the hydroxyl value of the acrylic polyol (b) may be 120 to 150 mg KOH/g, 140 to 150 mg KOH/g, 120 to 130 mg KOH/g, more than 100 and 130 mg KOH/g or less, or more than 100 and 110 mg KOH/g or less. The hydroxyl value of the acrylic polyol (b) is a value measured by the method according to JIS K 1557.

The acrylic polyol (b) can be obtained by, for example, imparting energy (light energy such as ultraviolet rays and electron beams, heat energy, etc.) to a mixture of (meth)acrylic monomers, and a polymerization initiator and polymerizing (meth)acrylic monomers. In other words, the acrylic polyol (b) may be a thermopolymerized polymer or a photopolymerized polymer. The acrylic polyol (b) may be a thermopolymerized polymer because it tends to be a polymer in which the polymerization reaction and the cross-linking reaction are completed.

The acrylic polyol (B) may contain one acrylic polyol (b) or two or more thereof in combination. In addition, the acrylic polyol (B) may contain an acrylic polyol (b') (an acrylic polyol having one or both of the glass transition temperature and the hydroxyl value outside the above range) other than the acrylic polyol (b).

The content of the acrylic polyol (b') in the acrylic polyol (B) based on a total mass of the acrylic polyol (B) may be 50 mass% or less (for example, 0 to 50 mass%) or may be 30 mass% or less or 10 mass% or less in order to easily obtain a coating film having better self-healing properties and contamination resistance.

Next, the (meth)acrylic acid ester and the (meth)acrylic acid hydroxy compound that can be reaction raw materials for the acrylic polyol (b), and the polymerization initiator will be described.

[(Meth)acrylic acid ester]

Examples of (meth)acrylic acid esters include an alkyl ester having an alkyl group having 1 to 20 carbon atoms. Examples of such (meth)acrylic acid esters include (meth)acrylic acid alkyl esters such as methyl (meth)acrylate, ethyl (meth)acrylate, propyl (meth)acrylate, butyl (meth) acrylate, pentyl (meth)acrylate, hexyl (meth)acrylate, 2-ethylhexyl (meth)acrylate, octyl (meth)acrylate, nonyl (meth)acrylate, decyl (meth)acrylate, and dodecyl (meth)acrylate; (meth)acrylic acid cycloalkyl esters such as cyclohexyl (meth)acrylate (products obtained by an esterification reaction between (meth)acrylic acid and an alicyclic alcohol); and (meth)acrylic acid aryl esters such as phenyl (meth)acrylate, and benzyl (meth)acrylate. Such (meth)acrylic acid esters may be used alone or two or more thereof may be used in combination.

[(Meth)acrylic acid hydroxy compound]

The (meth)acrylic acid hydroxy compound has one or more hydroxyl groups in the molecule that can serve as reaction sites with the polyisocyanate composition. Examples of (meth)acrylic acid hydroxy compounds include acrylic acid hydroxy compounds such as 2-hydroxyethyl acrylate, 2-hydroxypropyl acrylate, 4-hydroxybutyl acrylate, 3-hydroxy-2,2-dimethylpropyl acrylate, and pentaerythritol triacrylate; and methacrylic acid hydroxy compounds such as 2-hydroxyethyl methacrylate, 2-hydroxypropyl methacrylate, 4-hydroxybutyl methacrylate, 3-hydroxy-2,2-dimethylpropyl methacrylate, and pentaerythritol trimethacrylate. These (meth)acrylic acid hydroxy compounds may be used alone or two or more thereof may be used in combination.

[Polymerization initiator]

Examples of polymerization initiators include thermal polymerization initiators and photopolymerization initiators. The polymerization initiator is appropriately selected depending on polymerization methods.

Examples of thermal polymerization initiators include peroxydicarbonates such as di-2-ethylhexyl peroxydicarbonate; peroxyesters such as t-butyl peroxybenzoate, t-butyl peroxy-2-ethylhexanoate, t-butylperoxyisopropyl carbonate, and t-hexylperoxyisopropyl carbonate; and peroxyketals such as di(t-butylperoxy)-2-methylcyclohexane, di(t-butylperoxy)3,3,5-trimethylcyclohexane and di(t-butylperoxy) cyclohexane.

Examples of photopolymerization initiators include acetophenones such as acetophenone, methoxyacetophenone, 2,2-diethoxyacetophenone, p-dimethylaminoacetophenone, 2,2-dimethoxy-2-phenylacetophenone, $\alpha$-hydroxy-$\alpha,\alpha$'-dimethylacetophenone, 2-hydroxy-2-cyclohexylacetophenone, and 2-methyl-1[4-(methylthio)phenyl]-2-morpholinopropanone-1; benzoin ethers such as benzoin, benzoin methyl ether, benzoin ethyl ether, and benzoin isopropyl butyl ether; ketones such as benzophenone, 2-chlorobenzophenone, p,p'-dichlorobenzophenone, N,N'-tetramethyl-4,4'-diaminobenzophenone, and 4-(2-hydroxyethoxy)phenyl(2-hydroxy-2-propyl)ketone; thioxanthones such as thioxanthone, 2-chlorothioxanthone, and 2-methylthioxanthone; phosphine oxides such as bisacylphosphine oxide, and benzoylphosphine oxide; ketals such as benzyl dimethyl ketal; and quinones such as camphane-2,3-dione, and phenanthrenequinone.

(Polydimethylsiloxane compound)

The coating material composition may contain a polydimethylsiloxane compound. When a polydimethylsiloxane compound is used, not only can the smoothness and contamination resistance of the coating film be further improved but also the scratch resistance can be further improved while maintaining self-healing properties. Therefore, when a polydimethylsiloxane compound is used, even if the coating film obtained by coating is a thin film having a thickness of less than 20 $\mu$m, it is possible to achieve both self-healing properties and scratch resistance at a high level.

Here, polydimethylsiloxane compounds include modified products of polydimethylsiloxane in addition to polydimethylsiloxane (dimethylpolysiloxane). Examples of modified products of polydimethylsiloxane include modified products obtained by modifying polydimethylsiloxane with a compound having at least one hydroxyl group. Such a modified product has at least one hydroxyl group.

Examples of polydimethylsiloxane compounds include dimethylpolysiloxane-acrylic block copolymers having an acrylic moiety, dimethylpolysiloxane-polyether block copolymers having a polyether moiety, dimethylpolysiloxane-polyester block copolymers having a polyester moiety and dimethylpolysiloxane-polyether-polyester block copolymers having a polyether moiety and a polyester moiety. All of the above copolymers may have at least one hydroxyl group in its structure (in the acrylic moiety, in the polyether moiety or in the polyester moiety). Since the polydimethylsiloxane compound has at least one hydroxyl group in its structure, the additive reacts with the polyisocyanate, and after the coating film is formed, the additive is less likely to bleed out, the effect of improving contamination resistance is easily obtained, and the effect of easily obtaining excellent recoating properties is exhibited. Here, among polydimethylsiloxane compounds, one having two or more hydroxyl groups and an acrylic block does not correspond to the acrylic polyol (B).

Examples of dimethylpolysiloxane-acrylic block copolymers include BYK-SILCLEAN3700 (commercially available from BYK Japan, number average molecular weight: 7,600, silicon content (in terms of SiO$_2$): 1 mass%).

Examples of dimethylpolysiloxane-polyether block copolymers include BYK-377 (number average molecular weight: 1,400, silicon content: 18 mass%), BYK-SILCLEAN3720 (number average molecular weight: 1,100, silicon content: 17 mass%), BYK-9200 (number average molecular weight: 4,600, silicon content: 36 mass%), BYK-9201 (number average molecular weight: 4,100, silicon content: 20 mass%), BYK-9204 (number average molecular weight: 5,700, silicon content: 26 mass%), BYK-9205 (number average molecular weight: 4,800, silicon content: 37 mass%), BYK-9206 (number average molecular weight: 5,400, silicon content: 34 mass%), BYK-9210 (number average molecular weight: 4,200, silicon content: 14 mass%), BYK-9211 (number average molecular weight: 4,900, silicon content: 37 mass%), BYK-9215 (number average molecular weight: 4,500, silicon content: 29 mass%), BYK-9230 (number average molecular weight: 6,000, silicon content: 20 mass%), BYK-9241 (number average molecular weight: 6,000, silicon content: 22 mass%), BYK-9242 (number average molecular weight: 10,500, silicon content: 16 mass%), BYK-9247 (number average molecular weight: 5,400, silicon content: 25 mass%), BYK-9420 (number average molecular weight: 2,500, silicon content: 33 mass%), BYK-9001 (number average molecular weight: 6,800, silicon content: 22 mass%), BYK-9004 (number average molecular weight: 6,800, silicon content: 17 mass%), and BYK-9020 (number average molecular weight: 10,500, silicon content: 17 mass%). All of the above products are products commercially available from BYK Japan.

Examples of dimethylpolysiloxane-polyester block copolymers include BYK-370 (commercially available from BYK Japan, number average molecular weight: 2,100, silicon content: 8 mass%).

Examples of dimethylpolysiloxane-polyether-polyester block copolymers include BYK-375 (commercially available from BYK Japan, number average molecular weight: 2,200, silicon content: 15 mass%).

The number average molecular weight of the polydimethylsiloxane compound may be 1,000 to 15,000 and may be 1,500 to 12,000 or 2,000 to 8,000. If the number average molecular weight of the polydimethylsiloxane compound is 1,000 or more, self-healing properties of the coating film are further improved. If the number average molecular weight of the polydimethylsiloxane compound is 15,000 or less, the smoothness of the coating film is further improved, and the appearance of the coating film is further improved.

In order to further improve the smoothness, slip resistance, contamination resistance, and scratch resistance of the coating film, the silicon content of the polydimethylsiloxane compound based on a total mass of the polydimethylsiloxane compound may be 0.1 mass% or more and may be 0.5 mass% or more or 1.0 mass% or more. In order to further reduce the occurrence of cissing and further reduce deterioration in recoating properties, the silicon content of the polydimethylsiloxane compound based on a total mass of the polydimethylsiloxane compound may be 50 mass% or less, and may be 45 mass% or less, 40 mass% or less, 15 mass% or less, 10 mass% or less or 5.0 mass% or less. In view of this, the silicon content of the polydimethylsiloxane compound based on a total mass of the polydimethylsiloxane compound may be 0.1 to 50 mass%, 0.1 to 15 mass%, 0.5 to 45 mass%, 0.5 to 10 mass%, 1.0 to 40 mass% or 1.0 to 5.0 mass%. Here, the silicon content is a value in terms of $SiO_2$ and is a value measured by a thermogravimetric-differential thermal analysis (TG-DTA) method.

The polydimethylsiloxane compounds may be used alone or two or more thereof may be used in combination.

The amount of the polydimethylsiloxane compound added may be adjusted so that the silicon content in terms of $SiO_2$ in the coating material composition (based on a total amount of the organic polyisocyanate (A), the acrylic polyol (B) and the polydimethylsiloxane compound) is within the range described below.

The polydimethylsiloxane compound may be added when the acrylic polyol (B) and the organic polyisocyanate (A) are mixed. For example, when a coating film is formed, the organic polyisocyanate (A), the acrylic polyol (B) and the polydimethylsiloxane compound may be mixed and stirred. In addition, when the polydimethylsiloxane compound has at least one hydroxyl group, the polydimethylsiloxane compound may be reacted with an organic polyisocyanate in advance and incorporated into the organic polyisocyanate (A). In other words, the organic polyisocyanate (A) (for example, the modified polyisocyanate (a)) may be an organic polyisocyanate modified with a polydimethylsiloxane compound. In this case, the reaction solution obtained by the reaction between the polydimethylsiloxane compound and the organic polyisocyanate may be mixed and stirred with the acrylic polyol (B) and used when a coating film is formed.

(Other components)

Various coating additives can be used in the coating material composition as necessary. Examples of coating additives include those for imparting leveling properties and contamination resistance of the coating film, as well as those for further improving scratch resistance while maintaining self-healing properties. Even if the coating film is thin, the coating additive makes it easier to achieve both self-healing properties and scratch resistance in practical use. Examples of additives include antioxidants such as 2,6-di-tert-butyl-4-methylphenol, UV absorbers, pigments, dyes, solvents, flame retardants, hydrolysis inhibitors, lubricants, plasticizers, fillers, antistatic agents, dispersants, catalysts, storage stabilizers, and thickeners.

As the catalyst, a known urethanization catalyst can be used. Examples thereof include organometallic compounds such as dibutyltin diacetate, dibutyltin dilaurate, and dioctyltin dilaurate, and organic amines such as triethylenediamine, triethylamine, diazabicycloundecene, and diazabicyclononene and salts thereof. These catalysts may be used alone or two or more thereof may be used in combination. The catalyst may be added when a coating film is formed.

($M_{NCO}/M_{OH}$)

The ratio R (=$M_{NCO}/M_{OH}$) of the number of moles ($M_{NCO}$) of isocyanate groups in the isocyanate group-containing compound contained in the coating material composition to the number of moles ($M_{OH}$) of hydroxyl groups in the hydroxyl group-containing compound contained in the coating material composition may be 0.8 or more and may be 0.9 or more or 1.0 or more in order to further reduce excessive hydroxyl groups, further improve water resistance and moist heat resistance, further reduce a decrease in the crosslinking density, and further improve durability (contamination resistance, etc.) and the mechanical strength of the coating film. In order to further reduce excessive isocyanate groups, reduce excessive generation of isocyanurate groups and urea groups, and further improve flexibility and self-healing properties of the coating film, the ratio R may be 1.3 or less and may be 1.2 or less or 1.1 or less. In view of this, the ratio R may be 0.8 to 1.3, 0.9 to 1.2 or 1.0 to 1.1.

For the same reason as above, the ratio of the number of moles of isocyanate groups in the organic polyisocyanate (A) to the sum of the number of moles of hydroxyl groups in the acrylic polyol (B) and hydroxyl groups in the polydimethylsiloxane compound may be 0.8 to 1.3.

(Silicon content)

The silicon content in terms of $SiO_2$ in the coating material composition based on a total amount of the organic polyisocyanate (A), the acrylic polyol (B) and the polydimethylsiloxane compound is preferably 0.001 to 0.1 mass%. If the silicon content is 0.001 mass% or more, the smoothness, slip resistance, contamination resistance, and scratch resistance of the obtained coating film become better. If the silicon content is 0.1 mass% or less, it is possible to further reduce the occurrence of cissing and further reduce deterioration of recoating properties. For the same reason as above, the silicon content may be 0.002 mass% or more, 0.005 mass% or more or 0.01 mass% or more, and may be 0.09 mass% or less or 0.05 mass% or less. Here, the "total amount of the organic polyisocyanate (A), the acrylic polyol (B) and the polydimethylsiloxane compound" can be rephrased as the "amount of total resin solid contents."

The coating material composition can be prepared by mixing, for example, the organic polyisocyanate (A), the acrylic polyol (B), and optionally the polydimethylsiloxane compound and/or the additive so that the ratio R and the silicon content are within the above range.

As described above, using the coating material composition according to one aspect of the present disclosure, it is possible to obtain a coating film that achieves both favorable self-healing properties and contamination resistance. In addition, it is possible to obtain a coating film that not only has self-healing properties and contamination resistance but also has excellent smoothness and adhesion. In particular, when the polydimethylsiloxane compound is used, it is possible to obtain a thin coating film that achieves both favorable self-healing properties and contamination resistance and having a thickness of less than 20 μm. For these reasons, the coating material composition according to one aspect of the present disclosure can be suitably used for members of vehicle exterior materials for which fine processability, favorable design properties, and weight reduction of exterior parts are required, and for forming a surface coating film of plastic molded articles.

While the coating material composition according to one aspect of the present disclosure has been described above, the coating material composition and the method of producing the same according to the present disclosure are not limited to the above aspects. For example, the coating material composition may contain a reaction product of the organic polyisocyanate (A) and the polydimethylsiloxane compound having at least one hydroxyl group in place of the organic polyisocyanate (A) and the polydimethylsiloxane compound or in addition to the organic polyisocyanate (A) and the polydimethylsiloxane compound.

<Kit>

A kit according to one aspect of the present disclosure is a kit for preparing the above coating material composition (a coating material composition preparation kit), and includes, for example, a first agent containing the organic polyisocyanate (A) and a second agent containing the acrylic polyol (B). Here, a modified polyisocyanate which is a reaction product of the organic polyisocyanate and the polydimethylsiloxane compound having at least one hydroxyl group (for example, a reaction product of the polyisocyanate component (a1) and the polyol component (a2) or its modified product, and a reaction product with the polydimethylsiloxane compound) is fall into the organic polyisocyanate (A) contained in the first agent contains.

The coating material composition preparation kit may further include agents other than the first agent and the second agent. Other agents may include, for example, the polydimethylsiloxane compound.

The first agent and the second agent may be prepared so that the coating material composition is obtained by mixing them, and the first agent and the second agent and agents other than the first agent and the second agent are prepared so that the coating material composition is obtained by mixing them. For example, when a coating material composition containing the polydimethylsiloxane compound is prepared, the polydimethylsiloxane compound may be added to the first agent and/or the second agent and the polydimethylsiloxane compound may be added to other agent. The above additives that can be contained in the coating material composition may be contained in any of the first agent, the second agent and other agents.

When the coating material composition preparation kit is used, for example, the first agent, the second agent, and other agents that are optionally used may be mixed so that the ratio R is within the above range.

<Coating film>

A coating film according to one aspect of the present disclosure is a self-repairing type coating film, and includes a cured product of the above coating material composition. The coating film can exhibit self-healing properties within 1 hour, for example, at room temperature (for example, 5 to 35°C) or when heated at 40 to 60°C. In addition, the coating film can exhibit favorable smoothness under high humidity conditions and favorable contamination resistance. The inventors speculated that the smoothness is improved by improving drying properties and moisture resistance, and the contamination resistance is improved by increasing the crosslinking density.

The cured product of the coating material composition contains a polyurethane resin having a urethane structure produced by a urethanization reaction between the organic polyisocyanate (A) and the acrylic polyol (B). The urethane structure contained in the polyurethane resin includes, in addition to the urethane group (-CONH-), the reaction residue of the organic polyisocyanate (A) and the reaction residue of the acrylic polyol (B), and optionally, includes the reaction residue of the polydimethylsiloxane compound (polydimethylsiloxane compound having at least one hydroxyl group).

The thickness of the coating film is, for example, 5 to 40 $\mu$m. The coating film may be a thin film having a thickness of less than 20 $\mu$m. When the coating material composition contains the polydimethylsiloxane compound (or a reaction product of the organic polyisocyanate (A) and the polydimethylsiloxane compound having at least one hydroxyl group), even if the thickness of the coating film is less than 20 $\mu$m (for example, 5 $\mu$m), the smoothness, contamination resistance and adhesion become favorable and self-healing properties against scratches are excellent.

The coating film is generally formed on an adherend. That is, one aspect of the present disclosure includes an adherend and a coating film formed on the adherend. The adherend will be described below.

<Method of forming coating film>

A method of forming a coating film according to one aspect of the present disclosure includes applying the above coating material composition onto an adherend and performing curing. Details of the adherend are described above.

Examples of adherends include molded articles molded from materials such as stainless steel, phosphate-treated steel, zinc steel, iron, copper, aluminum, brass, glass, acrylic polyols, polycarbonate resins, polyethylene terephthalate resins, polyethylene naphthalate resins, polybutylene phthalate resins, polystyrene resins, AS resins, ABS resins, polycarbonate-ABS resins, 6-nylon resins, 6,6-nylon resins, MXD6 nylon resins, polyvinyl chloride resins, polyvinyl alcohol resins, polyurethane resins, phenolic resins, melamine resins, polyacetal resins, chlorinated polyolefin resins, polyolefin resins, polyamide resins, polyether ether ketone resins, polyphenylene sulfide resins, NBR resins, chloroprene resins, SBR resins, and SEBS resins, and surface-treated products of the molded articles. The surface-treated product may be a molded article (surface-treated molded article) of an olefin resin such as polyethylene or polypropylene that has been subjected to a surface treatment such as a corona discharge treatment.

The adherend may have another coating film on its surface that can serve as an intermediate forming layer. In other words, the coating material composition may be applied directly onto the surface of the above molded article or may be applied onto another coating film that has been base-coated on the surface of the above molded article. The other coating film may be a single layer or multiple layers.

The coating material composition may be applied by a spraying, brushing, or immersion method. Using the coating material composition according to one aspect of the present disclosure, even with spray coating which is easily affected by humidity, a coating film having excellent smoothness and self-healing properties is obtained.

The coating material composition may be cured, for example, by heating. Heating for curing may be heating for drying. That is, when the coating material composition contains a solvent, curing of the coating material composition may be performed simultaneously (in parallel) with drying for removing the solvent. The heating temperature may be, for example, 60 to 150°C. The heating time may be, for example, 1 to 10 hours.

[Examples]

Hereinafter, examples according to the present disclosure will be described, but the present disclosure is not limited to the interpretation of these examples.

<Measurement of number average molecular weight>

The number average molecular weight disclosed in this example was a value measured under the following conditions.

[Conditions]

- Measurement instrument: "HLC-8120" (commercially available from Tosoh Corporation)
- Column: "TSKguardcolumn HXL-L" (commercially available from Tosoh Corporation)
  Particle size=6 μm, size=6 mm ID×30 cm×4 columns
- Carrier: tetrahydrofuran (THF)
- Detector: parallax refraction
- Sample: 0.1% THF solution
- Calibration curve: polystyrene

<Measurement of NCO content>

The NCO content disclosed in this example was a value measured according to the method described in JIS K 1603-1 (polyurethane raw material aromatic isocyanate test method).

<Measurement of viscosity>

The viscosity disclosed in this example was a value obtained by measuring the viscosity at 25°C with a No. 4 rotor using a B-type viscometer (model "DVL-BII type" commercially available from Tokyo Keiki Co., Ltd.).

<Measurement of free HDI content>

The free HDI content disclosed in this example was a value calculated from a peak area ratio of hexamethylene diisocyanate in the polyisocyanate composition by performing GPC (HLC-8120 commercially available from Tosoh Corporation) measurement.

<Measurement of silicon content>

The silicon content disclosed in this example was a value determined by obtaining a mass residual rate after holding under a nitrogen atmosphere at 500°C for 30 minutes by a thermogravimetric-differential thermal analysis (TG-DTA) method, and calculating a value in terms of $SiO_2$ assuming that the mass residual rate corresponds to the silica residual rate.

<Synthesis of modified polyisocyanate>

(Synthesis Example 1)

890 g of hexamethylene diisocyanate (commercially available from Tosoh Corporation, NCO content: 49.9 mass%, hereinafter referred to as "HDI") and 110 g of PTMG-250 (commercially available from BASF, polytetramethylene glycol, product name: Poly THF250, number average molecular weight of 250) were put into a four-neck flask including a stirrer, a thermometer, a cooling pipe and a dropping funnel and having a volume of 1 L, and a urethanization reaction was caused under a nitrogen gas flow at 80°C for 2 hours. Then, 0.05 g of zirconium octylate (product name: Zirconyl Octoate, commercially available from Daiichi Kigenso Kagaku Kogyo Co., Ltd., hereinafter referred to as "OctZr") was added, and an allophanatization reaction was performed at 110°C for 2 hours. If the NCO content reached 37.0 mass%, 0.5 g of JP-508 (product name, acid phosphate ester, commercially available from Johoku Chemical Co., Ltd.) was added to perform a termination reaction, and the reaction solution was cooled to room temperature. This reaction solution was subjected to thin film distillation at 130°C and 0.04 kPa to remove unreacted HDI, and thereby a polyisocyanate P1 was obtained.

The polyisocyanate P1 was a liquid having an NCO content of 16.2 mass% and a transparent appearance, the number average molecular weight was 1,400, the average number of functional groups calculated from the NCO content and the number average molecular weight was 5.4, the viscosity at 25°C was 2,000 mPa·s, and the free HDI content was 0.2 mass%. It was confirmed through proton nuclear magnetic resonance ($^1$H-NMR) spectrums that the polyisocyanate P1 mainly contained the allophanate-modified polyisocyanate, and contained a slight amount of the isocyanurate-modified polyisocyanate. In addition, the content of the isocyanurate-modified polyisocyanate based on a total amount of the allophanate-modified polyisocyanate and the isocyanurate-modified polyisocyanate was 2 mol%.

(Synthesis Example 2)

880 g of HDI and 120 g of PCD-250 (polyhexamethylene polycarbonate diol, number average molecular weight of 250) were put into a four-neck flask including a stirrer, a thermometer, a cooling pipe and a dropping funnel and having a volume of 1 L, and a urethanization reaction was caused under a nitrogen gas flow at 80°C for 2 hours. Then, 0.05 g of OctZr was added, and an allophanatization reaction was caused at 110°C for 2 hours. If the NCO content reached 35.9 mass%, 0.05 g of JP-508 was added to perform a termination reaction, and the reaction solution was cooled to room temperature. This reaction solution was subjected to thin film distillation at 130°C and 0.04 kPa to remove unreacted HDI, and thereby a polyisocyanate P2 was obtained.

The polyisocyanate P2 was a liquid having an NCO content of 15.9 mass% and a transparent appearance, and the number average molecular weight was 1,350, the average number of functional groups calculated from the NCO content and the number average molecular weight was 5.1, the viscosity at 25°C was 4,000 mPa·s, and the free HDI content was 0.2 mass%. It was confirmed through proton nuclear magnetic resonance ($^1$H-NMR) spectrums that the polyisocyanate P2 mainly contained the allophanate-modified polyisocyanate, and contained a slight amount of the isocyanurate-modified polyisocyanate. In addition, the content of the isocyanurate-modified polyisocyanate based on a total amount of the allophanate-modified polyisocyanate and the isocyanurate-modified polyisocyanate was 2 mol%.

(Synthesis Example 3)

870 g of HDI and 130 g of PCD-500 (polyhexamethylene polycarbonate diol, number average molecular weight of 500) were put into a four-neck flask including a stirrer, a thermometer, a cooling pipe and a dropping funnel and having a volume of 1 L, and a urethanization reaction was caused under a nitrogen gas flow at 80°C for 2 hours. Then, 0.05 g of OctZr was added, and an allophanatization reaction was caused at 110°C for 2 hours. If the NCO content reached 39.1 mass%, 0.05 g of JP-508 was added to perform a termination reaction, and the reaction solution was cooled to room temperature. This reaction solution was subjected to thin film distillation at 130°C and 0.04 kPa to remove unreacted HDI, and thereby a polyisocyanate P3 was obtained.

The polyisocyanate P3 had an NCO content of 13.2 mass% and a number average molecular weight of 1,450, the average number of functional groups calculated from the NCO content and the number average molecular weight was 4.6, the viscosity at 25°C was 6,000 mPa·s, and the free HDI content was 0.2 mass%. It was confirmed through proton nuclear magnetic resonance ($^1$H-NMR) spectrums that the polyisocyanate P3 mainly contained the allophanate-modified polyisocyanate, and contained a slight amount of the isocyanurate-modified polyisocyanate. In addition, the content of the isocyanurate-modified polyisocyanate based on a total amount of the allophanate-modified polyisocyanate and the isocyanurate-modified polyisocyanate was 3 mol%.

<Synthesis of acrylic polyol (B)>

(Synthesis Example 4)

70 g of butyl acetate was put into a four-neck flask including a stirrer, a thermometer, a cooling pipe and a dropping funnel and having a volume of 300 mL, and heated to 120°C. Next, 38.0 g of methyl methacrylate (commercially available from Mitsubishi Gas Chemical Company, Inc., hereinafter referred to as "MMA"), 26.0 g of butyl acrylate (commercially available from Nippon Shokubai Co., Ltd., hereinafter referred to as "BA"), 31.0 g of 2-hydroxyethyl acrylate (hereinafter referred to as "2HEA"), 5.0 g of isobomyl acrylate (commercially available from Kyoeisha Chemical Co., Ltd., hereinafter referred to as "IBXA") and 2 g of perbutyl O (commercially available from NOF Corporation, t-butyl peroxy-2-ethylhexanoate) were added to the dropping funnel to prepare a mixed solution, and the mixed solution was then added dropwise to a reaction container over 4 hours. Then, the reaction solution was left at 120°C for 1 hour. Next, 30 g of butyl acetate and 1 g of perbutyl O were added to the dropping funnel to prepare a mixed solution, and the mixed solution was then added dropwise to the reaction container over 1 hour. Then, the sample was left at 120°C for 3 hours and cooled to room temperature. Thereby, a solution (AP1) of an acrylic polyol 1 was obtained.

When the hydroxyl value of the acrylic polyol 1 in AP1 was measured by the method according to JIS K 1557, the hydroxyl value of the acrylic polyol 1 was 150.0 mg KOH/g. In addition, the appearance of AP1 was a transparent liquid, the solid content of AP1 (the content of the acrylic polyol 1) was 50 mass%, and the glass transition temperature of the acrylic polyol 1 (hereinafter referred to as "Tg") was 15°C.

(Synthesis Examples 5 to 10)

Using raw materials and preparation ratios shown in Table 1, the same operation as in Synthesis Example 4 was performed to obtain solutions of acrylic polyols 2 to 7 (AP 2 to 7, solid content: 50 mass%).

[Table 1]

|  | Synthesis Example 4 | Synthesis Example 5 | Synthesis Example 6 | Synthesis Example 7 | Synthesis Example 8 | Synthesis Example 9 | Synthesis Example 10 |
|---|---|---|---|---|---|---|---|
| Acrylic polyol solution | AP1 1 | AP2 | AP3 | AP4 | AP5 | AP6 | AP7 |
| MMA | 38 | 40 | 41 | 43 | 45 | 32 | 60 |
| IBXA | 5 | 5 | 5 | 5 | 5 | 5 | 5 |
| BA | 26 | 30 | 33 | 35 | 39 | 42 | 14 |
| 2HEA | 31 | 25 | 21 | 17 | 11 | 21 | 21 |
| Hydroxyl value [mg KOH/g] | 150 | 121 | 101 | 82 | 53 | 101 | 101 |
| Tg[°C] | 15 | 15 | 15 | 16 | 16 | 0 | 52 |

<Examples 1 to 10 and Comparative Examples 1 to 5>

[Preparation of coating material composition]

Materials shown in Tables 2 and 3 were mixed in addition amounts shown in Tables 2 and 3 (unit: g), and coating material compositions 1 to 15 of Examples 1 to 10 and Comparative Examples 1 to 5 were prepared. The ratio R in Tables 2 and 3 is the ratio$[M_{NCO}/M_{OH}]$ of the number of moles of isocyanate groups in the isocyanate group-containing compound contained in the coating material composition (the number of moles of isocyanate groups in the organic polyisocyanate) $[M_{NCO}]$ to the number of moles of hydroxyl groups in the hydroxyl group-containing compound contained in the coating material composition (the sum of the number of moles of hydroxyl groups in the acrylic polyol and the number of moles of hydroxyl groups in the polydimethylsiloxane compound) $[M_{OH}]$. In addition, the Si content in Tables 2 and 3 indicates the silicon content in terms of $SiO_2$ in the coating material composition measured by the above method (based on a total amount of the organic polyisocyanate, the acrylic polyol and the polydimethylsiloxane compound).

[Production of coating film]

Under the following conditions, coating material compositions 1 to 15 were applied to the adherend, and the coating material composition was cured to obtain coating films of Examples 1 to 10 and Comparative Examples 1 to 5. Here, as the adherend, an acrylic resin sheet (commercially available from Kuraray Co., Ltd., 2 mm-thick) or a thermoplastic polyurethane film was used.

(Coating conditions)

- Coating method: an applicator was used
- Humidity condition: 50% RH
- Temperature condition: 23°C
- Drying (curing) condition: forced drying at 80°C for 5 hours
- Film thickness: about 20 $\mu$m

<Evaluation>

The coating films of Examples 1 to 10 and Comparative Examples 1 to 5 obtained above were subjected to the following evaluation tests 1 to 4. Here, in the evaluation tests 1, 3 and 4, a coating film produced using an acrylic resin sheet (commercially available from Kuraray Co., Ltd., 2 mm-thick) as an adherend was used, and in the evaluation test 2, a coating film produced using a thermoplastic polyurethane film as the adherend was used.

(Evaluation test 1: appearance of coating film (smoothness))

According to JIS Z 8741, the glossiness of the coating film at 60° was measured using a haze-gloss Reflectometer (commercially available from BYK-Additives & Instruments), and the appearance of the coating film was evaluated according to the following evaluation criteria. If the evaluation was A, the appearance of the coating film was good. Here, in this evaluation, good appearance of the coating film also means substantially good smoothness.

[Evaluation criteria]

- A: the glossiness was 80% or more
- B: the glossiness was less than 80%

(Evaluation test 2: contamination resistance)

The surface of the coating film was contaminated with a black marker (commercially available from Sharpy), and the sample was then left under an environment of a temperature of 23°C and a humidity of 50% RH for 1 hour. After standing, the contaminated surface of the coating film was wiped off with a gauze soaked in ethanol, and the color difference before and after contamination was calculated using spectro2guide (commercially available from BYK-Gardner) according to the following formula.

$$\text{color difference} = [(\Delta L^*)^2 + (\Delta a^*)^2 + (\Delta b^*)^2]^{1/2}$$

The contamination resistance was evaluated according to the following evaluation criteria. If the evaluate was A, the contamination resistance was determined as good.

[Evaluation criteria]

- A: the color difference was less than 1
- B: the color difference was 1 or more and less than 2
- C: the color difference was 2 or more

(Evaluation test 3: self-healing properties)

Under an environment at a temperature of 23°C and 50% RH, the surface of the coating film was scratched by rubbing the coating film with a brass wire brush. The degree of scratch repair was visually observed, and the time after scratches were applied until the scratches were completely repaired was measured. If the evaluation was A or B, self-healing properties were determined as good.

[Evaluation criteria]

- A: scratches were repaired within 1 hour at room temperature
- B: scratches were not repaired within 1 hour at room temperature, but the scratches were repaired within 1 hour when heated at 50°C
- C: scratches were not repaired within 1 hour whether at room temperature or when heated at 50°C.

(Evaluation test 4: adhesion)

According to JIS 5600-5-6, an adhesion test was performed by a cross cut method, and the adhesion was evaluated according to the following evaluation criteria. If the evaluation was A, adhesion was determined as good.

[Evaluation criteria]

- A: classification 0 to 1
- B: classification 2 to 5

[Table 2]

| | | | Example 1 | Example2 | Example3 | Example4 | Example5 | Example6 | Example7 | Example8 | Example9 | Example10 |
|---|---|---|---|---|---|---|---|---|---|---|---|---|---|
| Formulation | Organic polyisocyanate | P1 | 20 | 18 | 16 | 16 | - | - | 14 | 10 | 20 | 14 |
| | | P2 | - | - | - | - | 21 | - | - | - | - | - |
| | | P3 | - | - | - | - | - | 23 | - | - | - | - |
| | | P4 | - | - | - | - | - | - | 6.0 | 4.0 | - | 6.0 |
| | Acrylic polyol solution | AP1 | 60 | - | - | 34 | 58 | 54 | 61 | - | 60 | 61 |
| | | AP2 | - | 64 | - | - | - | - | - | - | - | - |
| | | AP3 | - | - | 68 | - | - | - | - | 70 | - | - |
| | | AP5 | - | - | - | 34 | - | - | - | - | - | - |
| | Catalyst | U-CAT SA102 | 0.01 | 0.01 | 0.01 | 0.01 | 0.01 | 0.01 | 0.01 | 0.01 | 0.01 | 0.01 |
| | Polydimethylsiloxane compound | BYK-SILCEAN3700 | 0.1 | 0.1 | 0.1 | 0.1 | 0.1 | 0.1 | 0.1 | 0.1 | - | - |
| | Solvent | butyl acetate | 20 | 18 | 16 | 16 | 21 | 23 | 19 | 15 | 20 | 19 |
| Ratio R | | | 1.0 | 1.0 | 1.0 | 1.0 | 1.0 | 1.0 | 1.0 | 1.0 | 1.0 | 1.0 |
| Si content | | | 0.005 | 0.005 | 0.005 | 0.005 | 0.005 | 0.005 | 0.005 | 0.005 | - | - |
| Evaluation | Appearance of coating film | | A | A | A | A | A | A | A | A | A | A |
| | Contamination resistance | Measured value | 0.7 | 0.8 | 0.9 | 0.9 | 0.7 | 0.7 | 0.6 | 0.8 | 0.9 | 0.8 |
| | | Determination | A | A | A | A | A | A | A | A | A | A |
| | Self-healing properties | | B | A | A | A | B | A | B | A | B | B |
| | Adhesion | | A | A | A | A | A | A | A | A | A | A |

EP 4 303 280 A1

[Table 3]

| | | | Comparative Example 1 | Comparative Example 2 | Comparative Example 3 | Comparative Example 4 | Comparative Example 5 |
|---|---|---|---|---|---|---|---|
| Formulation | Organic polyisocyanate | P1 | 13 | 10 | 16 | 16 | - |
| | | P4 | - | - | - | - | 17 |
| | Acrylic polyol solution | AP1 | - | - | - | - | 66 |
| | | AP4 | 73 | - | - | - | - |
| | | AP5 | - | 80 | - | - | - |
| | | AP6 | - | - | 68 | - | - |
| | | AP7 | - | - | - | 68 | - |
| | Catalyst | U-CAT SA102 | 0.01 | 0.01 | 0.01 | 0.01 | 0.01 |
| | Polydimethylsiloxane compound | BYK-SILCEAN3700 | 0.1 | 0.1 | 0.1 | 0.1 | 0.1 |
| | Solvent | butyl acetate | 13 | 10 | 16 | 16 | 17 |
| Ratio R | | | 1.0 | 1.0 | 1.0 | 1.0 | 1.0 |
| Si content | | | 0.005 | 0.005 | 0.005 | 0.005 | 0.005 |
| Evaluation | Appearance of coating film | | A | A | A | A | A |
| | Contamination resistance | Measured value | 1.4 | 2.3 | 3.1 | 0.7 | 0.6 |
| | | Determination | B | C | C | A | A |
| | Self-healing properties | | A | A | A | C | C |
| | Adhesion | | A | A | A | A | A |

Details of respective raw materials in Tables 2 and 3 are as follows.

- polyisocyanates P1 to P3: polyisocyanates P1 to P3 synthesized in Synthesis Examples 1 to 3
- polyisocyanate P4: HDI isocyanurate (product name: Coronate HXR, commercially available from Tosoh Corporation)
- AP1 to AP7: acrylic polyol solutions AP1 to AP7 synthesized in Synthesis Examples 4 to 10
- U-CAT SA102: (urethanization catalyst, 2-ethylhexanoate of DBU, commercially available from San-Apro Ltd.)
- BYK-SILCLEAN3700: (dimethylpolysiloxane-acrylic block copolymer, number average molecular weight: 7,600, silicon content (in terms of $SiO_2$): 1%, commercially available from BYK Japan)

**Claims**

1. A coating material composition comprising an organic polyisocyanate (A) and an acrylic polyol (B),

   wherein the organic polyisocyanate (A) comprises a modified polyisocyanate (a),
   wherein the modified polyisocyanate (a) is a reaction product of a polyisocyanate component (a1) and a polyol component (a2) or its modified product,
   wherein the polyisocyanate component (a1) comprises an organic diisocyanate or its modified product,
   wherein the polyol component (a2) comprises at least one selected from the group consisting of polytetramethylene glycol and polycarbonate polyols which have a number average molecular weight of 200 to 750, and
   wherein the acrylic polyol (B) comprises an acrylic polyol (b) having a glass transition temperature of 5 to 30°C and a hydroxyl value of more than 100 mg KOH/g and 150 mg KOH/g or less.

2. The coating material composition according to claim 1,
   wherein the average number of functional groups of the modified polyisocyanate (a) is 4.0 to 6.0.

3. The coating material composition according to claim 1 or 2,
   wherein the polyisocyanate component (a1) comprises at least one selected from the group consisting of aliphatic diisocyanates and alicyclic diisocyanates.

4. The coating material composition according to any one of claims 1 to 3,
   wherein the modified polyisocyanate (a) comprises an allophanate-modified polyisocyanate.

5. The coating material composition according to claim 4,
   wherein the modified polyisocyanate (a) further comprises an isocyanurate-modified polyisocyanate.

6. The coating material composition according to any one of claims 1 to 5, further comprising a polydimethylsiloxane compound.

7. The coating material composition according to claim 6,
   wherein the silicon content in terms of $SiO_2$ based on a total amount of the organic polyisocyanate (A), the acrylic polyol (B) and the polydimethylsiloxane compound is 0.001 to 0.1 mass%.

8. The coating material composition according to any one of claims 1 to 7,
   wherein the ratio of the number of moles of isocyanate groups in an isocyanate group-containing compound contained in the coating material composition to the number of moles of hydroxyl groups in a hydroxyl group-containing compound contained in the coating material composition is 0.8 to 1.3.

9. A kit for preparing the coating material composition according to any one of claims 1 to 8, comprising
   a first agent comprising the organic polyisocyanate (A) and a second agent comprising the acrylic polyol (B).

10. A coating film comprising a cured product of the coating material composition according to any one of claims 1 to 8.

11. A method of forming a coating film, comprising:
    applying the coating material composition according to any one of claims 1 to 8 onto an adherend and performing curing.

## INTERNATIONAL SEARCH REPORT

| International application No. |
|---|
| **PCT/JP2022/014101** |

### A. CLASSIFICATION OF SUBJECT MATTER

*C09D 175/04*(2006.01)i; *C09D 175/08*(2006.01)i; *C08G 18/40*(2006.01)i; *C09D 7/65*(2018.01)i
FI:  C09D175/04; C08G18/40 063; C09D175/08; C09D7/65

According to International Patent Classification (IPC) or to both national classification and IPC

### B. FIELDS SEARCHED

Minimum documentation searched (classification system followed by classification symbols)

C09D175/04; C09D175/08; C08G18/40; C09D7/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-107101 A (NIPPON POLYURETHANE IND CO LTD) 07 June 2012 (2012-06-07) claims, paragraphs [0017], [0034]-[0035], [0037]-[0039], [0073]-[0077], examples | 1-11 |
| Y | | 6-7 |
| X | WO 2016/098772 A1 (MITSUI CHEMICALS INC) 23 June 2016 (2016-06-23) claims, paragraphs [0011], [0040], [0045], [0050], [0060], [0241]-[0245], [0251]-[0252], [0263], examples | 1-5, 8-11 |
| Y | | 6-7 |
| A | JP 2019-131729 A (ASIA INDUSTRY) 08 August 2019 (2019-08-08) entire text | 1-11 |
| A | WO 2019/131617 A1 (ASAHI KASEI CORP) 04 July 2019 (2019-07-04) entire text | 1-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/014101**

| Patent document cited in search report | | | Publication date (day/month/year) | Patent family member(s) | Publication date (day/month/year) |
|---|---|---|---|---|---|
| JP | 2012-107101 | A | 07 June 2012 | (Family: none) | |
| WO | 2016/098772 | A1 | 23 June 2016 | US 2017/0342193 A1 claims, paragraphs [0011], [0040], [0045], [0050], [0060], [0241]-[0245], [0251]-[0252], [0263], examples EP 3235843 A1 KR 10-2017-0078817 A CN 107001558 A | |
| JP | 2019-131729 | A | 08 August 2019 | (Family: none) | |
| WO | 2019/131617 | A1 | 04 July 2019 | EP 3733799 A1 entire text CN 111511853 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019137840 A